# EUROPÄISCHE PATENTANMELDUNG

(11) **EP 3 822 371 A1**
(43) Veröffentlichungstag der Anmeldung: **19.05.2021**
(21) Anmeldenummer: 19208916.7
(22) Anmeldetag: 13.11.2019
(51) Int. Cl.: C21B 5/00, C21B 11/00, C21C 5/28, C21C 5/52, C21C 5/56

(54) **ROHSTAHLERZEUGUNG AUF BASIS EINER VORSCHMELZE**

(71) Anmelder: Primetals Technologies Austria GmbH, 4031 Linz (AT)
(72) Erfinder: Apfel, Jens, 77654 Offenburg (DE); Kluge, Jens, 86551 Aichach (DE); Oertelt, Peter, 4222 St. Georgen an der Gusen (AT); Wiedner, Steffen, 4030 Linz (AT)
(74) Vertreter: Metals@Linz

(57) **Zusammenfassung**

Die Anmeldung betrifft ein Verfahren zur Herstellung einer Einsatzschmelze für eine Konverterbehandlung,
dadurch gekennzeichnet, dass
dabei durch Vereinigung von flüssigem Roheisen (5,5') aus einem Hochofen und/oder einer Schmelzreduktionsanlage mit zumindest einer der Komponenten aus der Gruppe bestehend aus
- flüssiger Rohstahl (7) aus einem Elektrolichtbogenofen,
- flüssiger Rohstahl aus einem Induktionsofen,
- flüssiges Roheisen (7') aus einem Elektrolichtbogenofen,
- flüssiges Roheisen aus einem Induktionsofen,
- festes Roheisen aus einem Induktionsofen,
- fester Eisenschwamm aus einem Induktionsofen,
- flüssiges Roheisen aus einem Submerged Arc Furnace (SAF), eine Vorschmelze (9,9') hergestellt wird.

Die Anmeldung betrifft auch ein Verfahren zur Herstellung von flüssigem Rohstahl durch Konverterbehandlung einer derart hergestellten Einsatzschmelze durch ihre Vereinigung mit weiteren Komponenten in ein Konvertergefäß sowie eine Rohstahlerzeugungsanlage zur Durchführung eines solchen Verfahrens mit einer Roheisenzufuhr, einer Komponentenzufuhr, einer Mischvorrichtung zur Vereinigung von Roheisen und Komponenten, und einem Konvertergefäß.

## Beschreibung

### Gebiet der Technik

Die Erfindung betrifft ein Verfahren zur Herstellung einer Einsatzschmelze für Konverterbehandlung sowie ein Verfahren zur Herstellung von flüssigem Rohstahl unter Verwendung einer solchen Einsatzschmelze sowie eine Rohstahlerzeugungsanlage.

### Stand der Technik

Es ist bekannt, flüssigen Rohstahl durch Behandlung von Einsatzstoffen wie beispielsweise flüssigem Roheisen aus einem Hochofen oder einer Schmelzreduktionsanlage und Schrott in einem Konvertergefäß herzustellen. Zur Verminderung des Kohlenstoffgehaltes und zwecks Abbrand von Begleitelementen wie Si, Mn, P wird dabei Sauerstoff in die Schmelze im Konvertergefäß eingebracht, was zu exothermen Reaktionen und damit zu Temperaturerhöhung führt. Zur Einstellung der Energiebilanz werden Kühlmittel wie beispielsweise fester Schrott eingegeben.
Der Arbeitsschritt der Chargierung von Schrott in ein Konvertergefäß benötigt Zeit und verlängert auch die notwendige Zykluszeit.
Um einen ordnungsgemäßen Betrieb der Konverterbehandlung zu gewährleisten, müssen in erster Linie die vom flüssigen Roheisen als fühlbare Wärme und als chemische Wärme eingebrachten Wärmemengen die benötigte Energie bereitstellen.
Zur Vermeidung von zu hohen beziehungsweise zu niedrigen Temperaturen während der Konverterbehandlung ist bei herkömmlichen Verfahren ein begrenzter Spielraum für die einsetzbaren Mengen von flüssigem Roheisen und festem Schrott gegeben. Eine Mindestmenge an flüssigem Roheisen zur Wärmelieferung - circa 75% abhängig von der vorliegenden Roheisenanalyse und der Roheisentemperatur - und eine Höchstmenge für die Zugabe von kühlendem festem Schrott ergibt sich entsprechend.

Das flüssige Roheisen wird bei herkömmlichen Verfahren mittels Hochofenroute oder Schmelzreduktionsanlagen aus oxidischen Eisenträgern unter Verwendung von Kohlenstoff als Reduktionsmittel erzeugt, was beträchtliche CO2-Emissionen zur Folge hat. Eine Mindestmenge an flüssigem Roheisen bedeutet daher auch eine Mindestmenge an CO2-Emissionen für einen derartigen Weg der Herstellung des flüssigen Rohstahls. Im Vergleich zu einer schrottbasierten Rohstahlerzeugung, beispielsweise im Elektrolichtbogenofen, ist eine solche Herstellung von flüssigem Rohstahl mit Roheisen aus Hochofenroute oder Schmelzreduktionsanlagen deutlich stärker mit CO2-Emissionen belastet. Das erhöht hinsichtlich der mit CO2-Emissionen verbundenen Auflagen die Kosten der Produktion und vermindert die Wirtschaftlichkeit.

### Zusammenfassung der Erfindung

### Technische Aufgabe

Es ist die Aufgabe der vorliegenden Erfindung, Verfahren und Vorrichtung zur Herstellung von Einsatzschmelze beziehungsweise zur Rohstahlerzeugung bereitzustellen, mit denen zumindest ein Teil der einleitend umrissenen Probleme vermindert werden kann.

### Technische Lösung

Diese Aufgabe wird gelöst durch ein
Verfahren zur Herstellung einer Einsatzschmelze für eine Konverterbehandlung,
dadurch gekennzeichnet, dass
dabei durch Vereinigung von flüssigem Roheisen aus einem Hochofen und/oder einer Schmelzreduktionsanlage mit zumindest einer der Komponenten
aus der Gruppe bestehend aus
- flüssiger Rohstahl aus einem Elektrolichtbogenofen,
- flüssiger Rohstahl aus einem Induktionsofen,
- flüssiges Roheisen aus einem Elektrolichtbogenofen,
- flüssiges Roheisen aus einem Induktionsofen,
- festes Roheisen aus einem Induktionsofen,
- fester Eisenschwamm aus einem Induktionsofen,
- flüssiges Roheisen aus einem Submerged Arc Furnace (SAF), eine Vorschmelze hergestellt wird.

Die Einsatzschmelze ist eine Schmelze, die in ein Konvertergefäß eingegeben wird, um dort einem Verfahren zur Herstellung von Rohstahl - hier Konverterbehandlung genannt - unterzogen zu werden.
Unter Konvertergefäß ist dabei jede Art von metallurgischem Behandlungsgefäß zum Konvertieren von Einsatzschmelze zu Rohstahl zu verstehen, beispielsweise Stahlwerkskonverter wie beispielsweise LD-Konverter, OBM-Konverter, KMS-Konverter. Eine Schmelzreduktionsanlage ist beispielsweise eine COREX-Anlage oder eine FINEX-Anlage.

Bei dem erfindungsgemäßen Verfahren wird zur Herstellung einer Einsatzschmelze für eine Konverterbehandlung zuerst eine Vorschmelze hergestellt.
Dazu wird flüssiges Roheisen aus einem Hochofen und/oder einer Schmelzreduktionsanlage
mit zumindest einer der Komponenten
aus der Gruppe bestehend aus
- flüssiger Rohstahl aus einem Elektrolichtbogenofen,
- flüssiger Rohstahl aus einem Induktionsofen,
- flüssiges Roheisen aus einem Elektrolichtbogenofen,
- flüssiges Roheisen aus einem Induktionsofen,
- festes Roheisen aus einem Induktionsofen,
- fester Eisenschwamm aus einem Induktionsofen,
- flüssiges Roheisen aus einem Submerged Arc Furnace (SAF), vereinigt.

Bezüglich festem Roheisen beziehungsweise festem Eisenschwamm aus einem Induktionsofen gilt, dass das feste Roheisen beziehungsweise der feste Eisenschwamm im Induktionsofen gegenüber der Umgebungstemperatur erhitzt wird, und die jeweiligen Komponenten in erhitztem Zustand als Komponenten bei der Vereinigung zur Herstellung der Vorschmelze dienen.

### Vorteilhafte Wirkungen der Erfindung

Bei einem herkömmlichen Verfahren zur Herstellung von Rohstahl entspricht das flüssige Roheisen aus einem Hochofen und/oder einer Schmelzreduktionsanlage - gegebenenfalls nach Behandlungsschritten - im Wesentlichen der in das Konvertergefäß eingegebenen Einsatzschmelze. Die Herstellung der Einsatzschmelze ist entsprechend mit hohen direkten CO2-Emissionen belastet.
Eine erfindungsgemäße Einsatzschmelze unterscheidet sich von flüssigem Roheisen aus Hochofen und/oder Schmelzreduktionsanlage, da solches flüssige Roheisen erfindungsgemäß mit zumindest einer der genannten Komponenten vereinigt wird, um die sogenannte Vorschmelze herzustellen. Da die direkten spezifischen CO2-Emissionen bei der Herstellung der genannten Komponenten aufgrund anderer Eisenträger-Einsatzstoffe beziehungsweise andersartiger Verfahrensweisen geringer sind als bei der Herstellung von flüssigem Roheisen mittels Hochofen und/oder Schmelzreduktionsanlage, ist eine definierte Menge einer erfindungsgemäß hergestellten Vorschmelze mit weniger direkten CO2-Emissionen belastet als eine entsprechende Menge flüssiges Roheisen aus Hochofen und/oder Schmelzreduktionsanlage. Entsprechend ist auch eine unter Verwendung der Vorschmelze hergestellte Menge Einsatzschmelze für die Konverterbehandlung beziehungsweise der daraus gewonnene Rohstahl mit weniger CO2-Emissionen belastet. Insgesamt gelingt es also, durch Nutzung einer erfindungsgemäßen Vorschmelze bei der Herstellung der Einsatzschmelze für die Konverterbehandlung, trotz weiterer Nutzung von flüssigem Roheisen aus gegebenenfalls bereits vorhandenen Hochöfen und/oder Schmelzreduktionsanlagen die direkten CO2-Emissionen bei der Rohstahlerzeugung zu vermindern.

Der Lichtbogenofen ist beispielsweise ein AC-Typ, ein DC-Typ, ein RP-Typ, ein HP-Typ, ein UHP-Typ.

Die Konverterbehandlung dient zur Herstellung von flüssigem Rohstahl; bevorzugt handelt es sich bei dem Rohstahl um einen Kohlenstoffstahl, nicht um einen Rostfreistahl.

Nach einer Variante des erfindungsgemäßen Verfahrens ist die Vorschmelze bereits die Einsatzschmelze für die Konverterbehandlung; es erfolgen an der Vorschmelze vor ihrer Eingabe in einen Konverter also keine weiteren Behandlungsmaßnahmen, die nach der Vereinigung ihre Zusammensetzung und/oder Temperatur ändern.

Nach einer anderen Variante des erfindungsgemäßen Verfahrens wird die Einsatzschmelze für die Konverterbehandlung dadurch gewonnen, dass die Vorschmelze zumindest einer Behandlungsmaßnahme unterworfen wird; es erfolgen an der Vorschmelze vor ihrer Eingabe in einen Konverter also weiteren Behandlungsmaßnahmen, die nach der Vereinigung ihre Zusammensetzung und/oder Temperatur ändern. Gemäß einer vorteilhaften Ausführungsform umfasst die Behandlungsmaßnahme eine Entschwefelung.

Je nach Herkunft des Ausgangsmaterials für die Herstellung der Komponenten beziehungsweise des flüssigen Roheisens aus einem Hochofen und/oder einer Schmelzreduktionsanlage können die Komponenten oder das Roheisen unterschiedliche Mengen von Begleitelementen wie beispielsweise Schwefel, Phosphor, Silizium, Vanadium enthalten. Diese Begleitelemente werden bei der Vereinigung in die Vorschmelze eingebracht. Beispielsweise kann besonders über das flüssige Roheisen aus einem Hochofen und/oder einer Schmelzreduktionsanlage Schwefel in die Vorschmelze eingebracht werden. Um die Gehalte von Bergleitelementen im angestrebten Rohstahl den metallurgischen Anforderungen gemäß in gewünschten Mengenbereichen einstellen zu können, kann es vorteilhaft sein, an der Vorschmelze Behandlungsmaßnahmen vorzunehmen, um die Mengen der Begleitelemente in der Einsatzschmelze zu vermindern oder zu erhöhen und dadurch eine im Vergleich zur Vorschmelze anders zusammengesetzte Einsatzschmelze zu erhalten.
Bei der Rohstahlherstellung wird beispielsweise in der Regel ein möglichst niedriger Schwefelgehalt angestrebt. Je nach Schwefelgehalt der Vorschmelze kann es also günstig sein, die Vorschmelze vor der Eingabe in den Konverter zu entschwefeln. Auch andere Behandlungsmaßnahmen wie beispielsweise Entphosphorung, Entvanadisierung, Entsilizierung oder Kombinationen mehrerer Behandlungsmaßnahmen können durchgeführt werden.

Flüssiger Rohstahl aus einem Elektrolichtbogenofen basiert beispielsweise auf festem Schrott, oder auf einer Mischung von festem Schrott mit zumindest einer Komponente aus der Gruppe bestehend aus
- Eisenschwamm,
- Roheisenmasseln,
- Roheisengranulat,
- flüssiges Roheisen aus einem Hochofen und/oder einer Schmelzreduktionsanlage,
- festes Roheisen aus einem Hochofen und/oder einer Schmelzreduktionsanlage.
Durch den Einsatz von festem Schrott ist die CO2-Bilanz des flüssigen Rohstahls aus einem Lichtbogenofen gegebenenfalls günstiger als die CO2-Bilanz von flüssigem Roheisen aus einem Hochofen und/oder einer Schmelzreduktionsanlage, da die bei der Herstellung des Ausgangsmaterials für den Schrott aufgetretenen CO2-Emissionen bei der Herstellung des flüssigen Rohstahls aus einem Lichtbogenofen gegebenenfalls nicht vollständig als direkte CO2-Emissionen einberechnet werden.
Für die Herstellung von Eisenschwamm unter Verwendung eines wasserstoffhaltigen Reduktionsgasgemisches ist die CO2-Bilanz ebenfalls günstiger als die CO2-Bilanz von flüssigem Roheisen aus einem Hochofen und/oder einer Schmelzreduktionsanlage. Entsprechend wird die die CO2-Bilanz des flüssigen Rohstahls aus einem Lichtbogenofen bei Verwendung von Eisenschwamm ebenfalls günstig beeinflusst.

Flüssiger Rohstahl aus einem Induktionsofen basiert beispielsweise auf festem Schrott
oder
auf einer Mischung von festem Schrott mit zumindest einer Komponente aus der Gruppe bestehend aus
- Eisenschwamm,
- Roheisenmasseln,
- Roheisengranulat,
- flüssiges Roheisen aus einem Hochofen und/oder einer Schmelzreduktionsanlage,
- festes Roheisen aus einem Hochofen und/oder einer Schmelzreduktionsanlage.

Durch den Einsatz von festem Schrott ist die CO2-Bilanz des flüssigen Rohstahls aus einem Induktionsofen gegebenenfalls günstiger als die CO2-Bilanz von flüssigem Roheisen aus einem Hochofen und/oder einer Schmelzreduktionsanlage, da die bei der Herstellung des Ausgangsmaterials für den Schrott aufgetretenen CO2-Emissionen bei der Herstellung des flüssigen Rohstahls aus einem Induktionsofen gegebenenfalls nicht vollständig als direkte CO2-Emissionen einberechnet werden.
Für die Herstellung von Eisenschwamm unter Verwendung eines wasserstoffhaltigen Reduktionsgasgemisches ist die CO2-Bilanz ebenfalls günstiger als die CO2-Bilanz von flüssigem Roheisen aus einem Hochofen und/oder einer Schmelzreduktionsanlage. Entsprechend wird die die CO2-Bilanz des flüssigen Rohstahls aus einem Induktionsofen bei Verwendung von Eisenschwamm ebenfalls günstig beeinflusst.

Flüssiges Roheisen aus einem Elektrolichtbogenofen basiert beispielsweise auf festem Eisenschwamm
oder
auf einer Mischung von festem Eisenschwamm mit zumindest einer Komponente aus der Gruppe bestehend aus
- flüssiges Roheisen aus einem Hochofen und/oder einer Schmelzreduktionsanlage,
- festes Roheisen aus einem Hochofen und/oder einer Schmelzreduktionsanlage,
- Schrott.

Für die Herstellung von Eisenschwamm unter Verwendung eines wasserstoffhaltigen Reduktionsgasgemisches ist die CO2-Bilanz günstiger als die CO2-Bilanz von flüssigem Roheisen aus einem Hochofen und/oder einer Schmelzreduktionsanlage. Entsprechend wird die die CO2-Bilanz von flüssigem Roheisen aus einem Elektrolichtbogenofen bei Verwendung von Eisenschwamm günstig beeinflusst.
Durch den Einsatz von Schrott ist die CO2-Bilanz von flüssigem Roheisen aus einem Elektrolichtbogenofen gegebenenfalls günstiger als die CO2-Bilanz von flüssigem Roheisen aus einem Hochofen und/oder einer Schmelzreduktionsanlage, da die bei der Herstellung des Ausgangsmaterials für den Schrott aufgetretenen CO2-Emissionen bei der Herstellung des flüssigen Roheisens im Elektrolichtbogenofen gegebenenfalls nicht vollständig als direkte CO2-Emissionen einberechnet werden.

Flüssiges Roheisen aus einem Induktionsofen basiert beispielsweise auf festem Eisenschwamm
oder
auf einer Mischung von festem Eisenschwamm mit zumindest einer Komponente aus der Gruppe bestehend aus
- flüssiges Roheisen aus einem Hochofen und/oder einer Schmelzreduktionsanlage,
- festes Roheisen aus einem Hochofen und/oder einer Schmelzreduktionsanlage,
- Schrott.

Für die Herstellung von Eisenschwamm unter Verwendung eines wasserstoffhaltigen Reduktionsgasgemisches ist die CO2-Bilanz günstiger als die CO2-Bilanz von flüssigem Roheisen aus einem Hochofen und/oder einer Schmelzreduktionsanlage. Entsprechend wird die die CO2-Bilanz von flüssigem Roheisen aus einem Induktionsofen bei Verwendung von Eisenschwamm günstig beeinflusst.
Durch den Einsatz von Schrott ist die CO2-Bilanz von flüssigem Roheisen aus einem Induktionsofen gegebenenfalls günstiger als die CO2-Bilanz von flüssigem Roheisen aus einem Hochofen und/oder einer Schmelzreduktionsanlage, da die bei der Herstellung des Ausgangsmaterials für den Schrott aufgetretenen CO2-Emissionen bei der Herstellung des flüssigen Roheisens im Induktionsofen gegebenenfalls nicht vollständig als direkte CO2-Emissionen einberechnet werden.

Flüssiges Roheisen aus einem Submerged Arc Furnace (SAF) basiert beispielsweise auf festem Eisenschwamm oder auf einer Mischung von festem Eisenschwamm mit zumindest einer Komponente aus der Gruppe bestehend aus
- flüssiges Roheisen aus einem Hochofen und/oder einer Schmelzreduktionsanlage,
- festes Roheisen aus einem Hochofen und/oder einer Schmelzreduktionsanlage.

Für die Herstellung von Eisenschwamm unter Verwendung eines wasserstoffhaltigen Reduktionsgasgemisches ist die CO2-Bilanz günstiger als die CO2-Bilanz von flüssigem Roheisen aus einem Hochofen und/oder einer Schmelzreduktionsanlage. Entsprechend wird die die CO2-Bilanz von flüssigem Roheisen aus einem SAF bei Verwendung von Eisenschwamm günstig beeinflusst.

Grundsätzlich ist bei der Vereinigung zur Vorschmelze jedes Mengenverhältnis von flüssigem Roheisen aus einem Hochofen und/oder einer Schmelzreduktionsanlage und den eingesetzten Komponenten möglich. Nach einer vorteilhaften Ausführungsform werden die Mengenverhältnisse bei der Vereinigung zur Herstellung der Vorschmelze in Abhängigkeit von der Energiebilanz der Konverterbehandlung, der die Einsatzschmelze unterworfen werden soll, gewählt.

Ein weiterer Gegenstand der vorliegenden Anmeldung ist ein Verfahren zur Herstellung von flüssigem Rohstahl durch Konverterbehandlung, dadurch gekennzeichnet, dass eine erfindungsgemäß hergestellte Einsatzschmelze in ein Konvertergefäß eingegeben und dort mit weiteren Komponenten zur Herstellung von flüssigem Rohstahl vereinigt wird.

Bevorzugt handelt es sich bei dem Rohstahl um einen Kohlenstoffstahl, nicht um einen Rostfreistahl.

Die Vereinigung kann erfolgen, bevor und/oder während die Behandlungsschritte der Konverterbehandlung stattfinden. Bei der Konverterbehandlung zur Herstellung von Rohstahl aus einer Einsatzschmelze anwendbare Behandlungsschritte sind dem Fachmann bekannt und werden daher hier nicht im Detail ausgeführt.

Falls bei der Herstellung der Vorschmelze mit dem Roheisen aus einem Hochofen und/oder einer Schmelzreduktionsanlage vereinigte Komponenten eine höhere Temperatur als das Roheisen aus einem Hochofen und/oder einer Schmelzreduktionsanlage haben, kann die erfindungsgemäß hergestellte Einsatzschmelze eine höhere Temperatur als bei herkömmlichen, Roheisen aus einem Hochofen und/oder einer Schmelzreduktionsanlage verwendenden Verfahren zur Herstellung von flüssigem Rohstahl haben. In diesem Fall ergibt sich neben den voranstehend bereits geschilderten Vorteilen bezüglich den Komponenten der Vorschmelze zuzurechnenden direkten CO2-Emissionen der zusätzliche Vorteil, dass beispielsweise die in das Konvertergefäß gesamtheitlich - vom Beginn der Herstellung der Vorschmelze bis zum Ende der Konverterbehandlung - zugeführte Schrottmenge gesteigert werden kann. Mehr Schrottanteil bei der Herstellung des Rohstahls führt wiederum zu geringeren direkt dem Rohstahl zuzurechnenden CO2-Emissionen.

Die erfindungsgemäß hergestellte Einsatzschmelze weist im Vergleich zu einer herkömmlichen Verfahrensweise mit Roheisen aus einem Hochofen und/oder einer Schmelzreduktionsanlage einen geringeren Kohlenstoffgehalt auf, da bei der Herstellung der genannten Komponenten andere Eisenträger-Einsatzstoffe beziehungsweise andersartige Verfahrensweisen eingesetzt werden. Deshalb kann die Blasezeit bei der Konverterbehandlung vermindert werden. Verminderte Blasezeit erlaubt schnellere Zykluszeit und damit eine erhöhte Produktivität. Verminderte Blasezeit resultiert auch in höherem Ausbringen, weil weniger Eisenoxid entsteht und in die Schlacke übergeht.

Im Vergleich zu einer herkömmlichen Verfahrensweise mit Roheisen aus einem Hochofen und/oder einer Schmelzreduktionsanlage, in der Schrott erst im Konvertergefäß mit dem Roheisen vereinigt wird, kann Schrott beim erfindungsgemäßen Verfahren zur Rohstahlerzeugung schon früher, nämlich bei der Herstellung der Vorschmelze beziehungsweise der Einsatzschmelze in das Verfahren eingebracht werden. Damit ist eine Bereitstellung der benötigten Schrottmenge weniger zeitaufwändig, da kein oder weniger Schrott in das Konvertergefäß chargiert werden muss.

Das spart bei der Konverterbehandlung Zeit und erhöht somit die Produktivität.

Erfindungsgemäßes Vorgehen gibt bei der Rohstahlerzeugung im Vergleich zu einer herkömmlichen Verfahrensweise auch eine höhere Flexibilität hinsichtlich ökonomisch sinnvoll verwendbarer Einsatzstoffe und betrieblicher Fahrweisen.

Obwohl vorhandene Anlagen wie Hochöfen oder Schmelzreduktionsanlagen weiterverwendet werden können, ergeben sich bei erfindungsgemäßer Vorgehensweise die genannten Vorteile bei der Rohstahlproduktion; Nachteile herkömmlicher Verfahrensführung lassen sich bei erfindungsgemäßer Vorgehensweise vermindern. Auch die Nachteile eines, beispielsweise aufgrund der CO2-Emissionen erfolgenden, völligen Verzichtes auf Roheisen aus Hochöfen oder Schmelzreduktionsanlagen lassen sich vermeiden. Einerseits wäre es ökonomisch ungünstig, bestehenden Anlagen nicht bis zum Ende ihrer Lebenserwartung zu nutzen. Andererseits könnte es technische Schwierigkeiten bereiten, mit anderen Verfahrensweisen den im Hüttenwerk nachfolgenden Verbrauchern die für ihre Auslegung und Logistik benötigten gleich großen Mengen Rohstahl in der benötigten Qualität ökonomisch sinnvoll bereitzustellen. Beispielsweise würde eine alleinige Herstellung der benötigten Mengen flüssiger Schmelze via EAF-Route in einem einzelnen EAF gegebenenfalls Transformatorgrößen benötigen, die gegebenenfalls die vorhandene elektrische Leistungsversorgung übersteigen würde und/oder für die die notwendige Transformatorgröße derzeit technisch zu limitiert ist.
Erfindungsgemäße Verfahrensweise lässt es zu, solche Probleme zu vermeiden, weil sie in bestehenden Hüttenwerken unter weiterer Nutzung der bereits vorhandenen Anlagen erlaubt, mit gegebenenfalls überschaubarem Zusatzinvestitionen die bestehende Produktionskette mit ihren logistischen Anforderungen zu bedienen.
Sollte die Herstellung von Vorschmelze oder Einsatzschmelze temporär nicht möglich sein, kann herkömmliche Rohstahlerzeugung erfolgen, da die dafür erforderlichen Vorrichtungen ebenfalls bei erfindungsgemäßer Verfahrensweise betrieben werden und daher zur Verfügung stehen.

Bei dem erfindungsgemäßen Verfahren zur Herstellung von flüssigem Rohstahl kann es aus metallurgischen Gründen zur Sicherstellung der Energiebilanz bei der Konverterbehandlung notwendig sein, im Konverter durch Zugabe von Komponenten Energie zuzuführen. Eine der weiteren Komponenten, mit denen die Einsatzschmelze im Konverter vereinigt wird, ist nach einer Variante des Verfahrens ein Heizmittel, bevorzugt Ferrosilizium.

Bei dem erfindungsgemäßen Verfahren zur Herstellung von flüssigem Rohstahl kann es aus metallurgischen Gründen zur Sicherstellung der Energiebilanz bei der Konverterbehandlung notwendig sein, im Konverter durch Zugabe von Komponenten zu kühlen. Eine der weiteren Komponenten, mit denen die Einsatzschmelze im Konverter vereinigt wird, ist nach einer Variante des Verfahrens ein Kühlmittel, beispielsweise umfassend Schrott, Eisenerz, Roheisen, Eisenpellets, Kalk, DRI.

Ein weiterer Gegenstand der vorliegenden Anmeldung ist eine Rohstahlerzeugungsanlage zur Durchführung der erfindungsgemäßen Verfahren, dadurch gekennzeichnet, dass sie umfasst
- eine Roheisenzufuhr,
- eine Komponentenzufuhr,
- eine Mischvorrichtung zur Vereinigung von Roheisen und Komponenten,
- ein Konvertergefäß zur Rohstahlherstellung aus der Vorschmelze oder der Einsatzschmelze.

Dabei sind die Worte "eine" beziehungsweise "ein" als unbestimmte Artikel und nicht als Zahlwörter zu verstehen. Es kann eine Roheisenzufuhr vorhanden sein, oder mehrere. Es kann eine Komponentenzufuhr vorhanden sein, oder mehrere. Es kann ein Konvertergefäß vorhanden sein, oder mehrere Konvertergefäße.

Die Roheisenzufuhr ist geeignet zur Zufuhr von flüssigem Roheisen aus einem Hochofen und/oder einer Schmelzreduktionsanlage. Es handelt sich beispielsweise um einen Torpedowagen oder eine offene Transportpfanne.

Die Komponentenzufuhr ist geeignet zur Zufuhr zumindest einer der Komponenten
aus der Gruppe bestehend aus
- flüssiger Rohstahl aus einem Elektrolichtbogenofen,
- flüssiger Rohstahl aus einem Induktionsofen,
- flüssiges Roheisen aus einem Elektrolichtbogenofen,
- flüssiges Roheisen aus einem Induktionsofen,
- festes Roheisen aus einem Induktionsofen,
- fester Eisenschwamm aus einem Induktionsofen,
- flüssiges Roheisen aus einem Submerged Arc Furnace (SAF).

Vorteilhafterweise umfasst die Komponentenzufuhr zumindest ein Mitglied aus der Gruppe bestehend aus
- Elektrolichtbogenofen,
- Induktionsofen,
- Submerged arc furnace.

Pro Gruppenmitglied dieser Gruppe kann es ein Aggregat geben oder mehrere.
Es kann also ein Elektrolichtbogenofen vorhanden sein oder mehrere.
Es kann also ein Induktionsofen vorhanden sein oder mehrere. Es kann also ein Submerged arc furnace vorhanden sein oder mehrere.
Ebenso kann es Kombinationen der genannten Aggregate geben.

Die Mischvorrichtung ist geeignet, flüssiges Roheisen aus der Roheisenzufuhr beziehungsweise Komponenten aus der Komponentenzufuhr aufzunehmen.

Die Mischvorrichtung umfasst beispielsweise ein Roheisenmischgefäß, und/oder ein Rohstahlmischgefäß, und/oder ein Gefäß zur Herstellung der Vorschmelze durch Vereinigung von flüssigem Roheisen und Komponenten in dem betreffenden Gefäß. Die Mischvorrichtung kann auch mehrere der genannten Gefäße umfassen.

Gemäß einer vorteilhaften Ausführungsform umfasst die Rohstahlerzeugungsanlage auch eine Behandlungsvorrichtung, die zur Aufnahme von Vorschmelze und Ausgabe von Einsatzschmelze geeignet ist. Die Behandlungsvorrichtung kann mehrere Behandlungsaggregate zur Durchführung jeweils verschiedener Behandlungsschritte umfassen.
Auch das Gefäß, in dem die Vorschmelze hergestellt wirdbeispielsweise eine Chargierpfanne -, beziehungsweise ein gegebenenfalls vorhandenes separates Transfergefäß, das zum Transfer von Vorschmelze vom Ort ihrer Herstellung zum Konvertergefäß dient, kann als Teil der Behandlungsvorrichtung dienen.

Gemäß einer vorteilhaften Ausführungsform ist die Mischvorrichtung zur Vereinigung von Roheisen und Komponenten Teil der Roheisenzufuhr oder Teil der Komponentenzufuhr. Beispielsweise können Komponenten in einen Roheisenschmelze führenden Torpedowagen eingegeben werden, so dass der Torpedowagen, der als Roheisenzufuhr dient, auch als Mischvorrichtung dient.

### Kurze Beschreibung der Zeichnungen

In der Folge werden die Gegenstände der vorliegenden Anmeldung anhand schematischer und beispielhafter Darstellungen von Ausführungsformen erläutert.
Figur 1 zeigt ein herkömmliches Verfahren zur Herstellung von flüssigem Rohstahl mit Roheisen.
Figur 2 zeigt eine Ausführungsform eines erfindungsgemäßen Verfahrens zur Herstellung einer Vorschmelze und einer Einsatzschmelze sowie Herstellung von Rohstahl.
Figur 3 zeigt eine weitere Ausführungsform eines erfindungsgemäßen Verfahrens zur Herstellung einer Vorschmelze und einer Einsatzschmelze sowie Herstellung von Rohstahl.
Figuren 4a, 4b, 4c zeigen diverse Optionen zur Herstellung einer Vorschmelze.
Figuren 5a, 5b, 5c zeigen weitere Optionen zur Herstellung einer Vorschmelze.

### Beschreibung der Ausführungsformen

### Beispiele

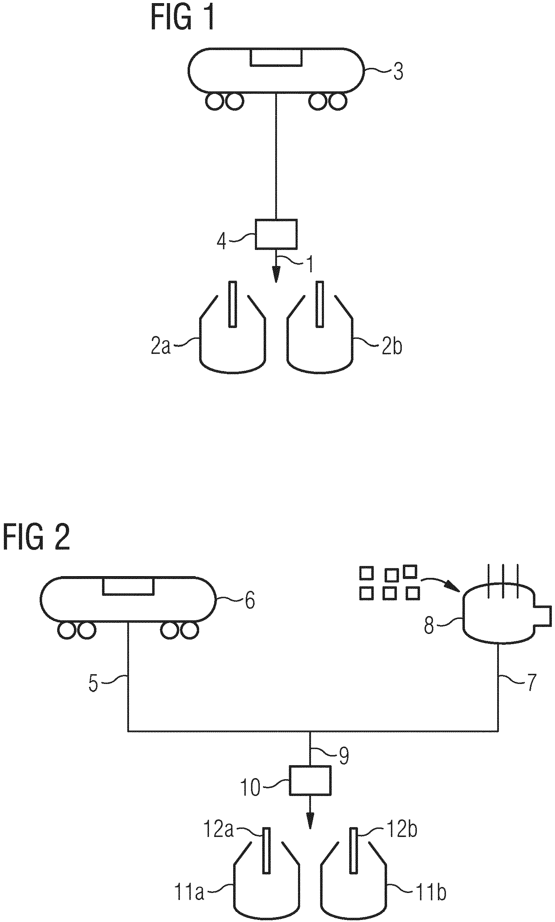

Figur 1 skizziert ein herkömmliches Verfahren zur Herstellung von flüssigem Rohstahl mit Roheisen aus Hochofenroute oder Schmelzreduktionsanlage. Flüssiges Roheisen 1 wird in die LD-Konverter 2a, 2b eingegeben, in denen Konverterbehandlung zur Herstellung von Rohstahl erfolgt. Das flüssige Roheisen 1 wird beispielsweise einem Torpedowagen 3 entnommen und vor der Eingabe in die LD-Konverter 2a,2b einer Entschwefelung unterzogen, dargestellt durch einen schematisch dargestellte Entschwefelungsanlage 4. Auf die Darstellung der ebenfalls erfolgenden Zugabe von festem Schrott in die LD-Konverter 2a,2b wurde aus Gründen der Übersichtlichkeit verzichtet.

Figur 2 zeigt in ähnlicher Darstellung ein erfindungsgemäßes Verfahren zur Herstellung einer Vorschmelze und einer Einsatzschmelze sowie Herstellung von Rohstahl. Flüssiges Roheisen 5 aus einem Torpedowagen 6 und flüssiger Rohstahl 7 - hergestellt aus Schrott, der schematisch als Quadrate dargestellt ist - aus einem Elektrolichtbogenofen 8 vereinigt werden. Die durch die Vereinigung hergestellte Vorschmelze 9 wird einer Entschwefelung, dargestellt durch eine Entschwefelungsanlage 10, unterzogen. Die dabei entstehende Einsatzschmelze wird in die LD-Konverter 11a, 11b eingegeben, in denen die Konverterbehandlung zur Herstellung von Rohstahl erfolgt - angedeutet durch die Blaselanzen 12a, 12b.

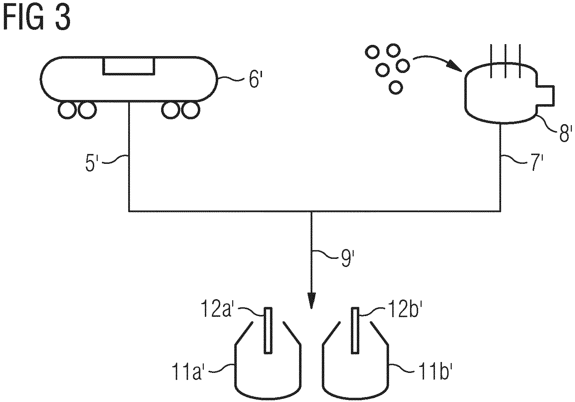

Figur 3 zeigt in einer zu Figur 2 weitgehend analogen Darstellung eine Ausführungsform, bei der flüssiges Roheisen 5' aus einem Torpedowagen 6' und flüssiges Roheisen 7' aus einem Elektrolichtbogenofen 8' - hergestellt aus DRI, das schematisch als Kreise dargestellt ist - vereinigt werden. Die durch die Vereinigung hergestellte Vorschmelze 9' wird als Einsatzschmelze in die LD-Konverter 11a', 11b' eingegeben, in denen die Konverterbehandlung zur Herstellung von Rohstahl erfolgt - angedeutet durch die Blaselanzen 12a', 12b'.

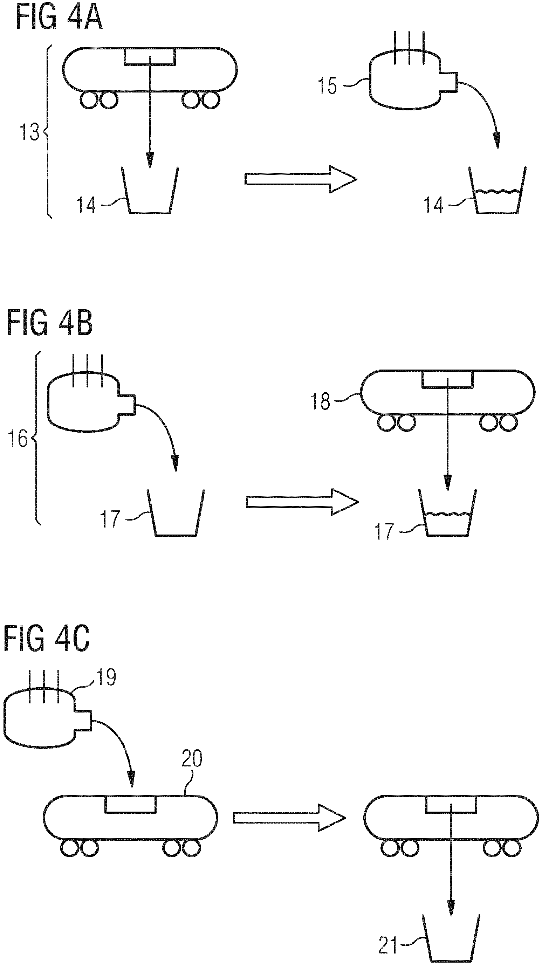

Beispiele diverser Optionen zur Herstellung der Vorschmelze sind in den Figuren 4a, 4b, 4c umrissen.

Figur 4a zeigt eine Roheisenzufuhr 13 mit einem Torpedowagen und einer Chargierpfanne 14. Flüssiges Roheisen wird aus dem Torpedowagen in die Chargierpfanne 14 eingegeben - angedeutet mit einem gebogenen Pfeil. Die mit dem flüssigen Roheisen teilweise gefüllte Chargierpfanne 14 wird anschließend zu einer Komponentenzufuhr 15, hier dargestellt als Elektrolichtbogenofen, transportiert - angedeutet durch einen Blockpfeil -, wo flüssiger Rohstahl hinzugefügt - angedeutet mit einem gebogenen Pfeil - wird.

Figur 4b zeigt eine Komponentenzufuhr 16 mit einem Elektrolichtbogenofen und einer Chargierpfanne 17. Flüssiger Rohstahl wird aus dem Elektrolichtbogenofen in die Chargierpfanne 17 eingegeben - angedeutet mit einem gebogenen Pfeil. Die mit dem flüssigen Rohstahl teilweise gefüllte Chargierpfanne 17 wird anschließend zu einer Roheisenzufuhr 18, hier dargestellt als Torpedowagen, transportiert, wo flüssiges Roheisen hinzugefügt wird - angedeutet mit einem gebogenen Pfeil.

In den Figuren 4a und 4b wird in den Chargierpfannen 14, 17 Vorschmelze durch Vereinigung von Roheisen und der Komponente Rohstahl aus einem Elektrolichtbogenofen hergestellt. Die Chargierpfannen 14, 17 dienen dabei als Mischvorrichtung zur Vereinigung von Roheisen und Komponenten. Die Mischvorrichtung Chargierpfanne 14 ist in Figur 4a Teil der Roheisenzufuhr 13. Die Mischvorrichtung Chargierpfanne 17 ist in Figur 4b Teil der Komponentenzufuhr 16.

Figur 4c zeigt, wie flüssiger Rohstahl aus einer Komponentenzufuhr 19, dargestellt mit einem Elektrolichtbogenofen, in eine mit flüssigem Roheisen teilweise gefüllte Roheisenzufuhr 20, dargestellt als Torpedowagen, eingefüllt wird - angedeutet mit einem gebogenen Pfeil. In dem Torpedowagen wird Vorschmelze durch Vereinigung von Roheisen und der Komponente Rohstahl aus einem Elektrolichtbogenofen hergestellt. Er dient dabei als Mischvorrichtung zur Vereinigung von Roheisen und Komponenten. In weiterer Folge wird die Vorschmelze aus dem Torpedowagen in ein Transfergefäß 21 zwecks Transfers zum BOF-Meltshop, in dem der flüssige Rohstahl hergestellt wird, eingegeben. Das Transfergefäß 21 dient auch als Behandlungsaggregat einer Behandlungsvorrichtung, in dem in der Folge Entschwefelung durchgeführt wird, bevor die dabei aus der Vorschmelze erhaltene Einsatzschmelze einem Konvertergefäß zugeführt wird - was zur besseren Übersichtlichkeit nicht extra dargestellt ist.

Es wäre auch möglich, als Teil der Roheisenzufuhr beziehungsweise als Teil der Komponentenzufuhr Puffergefäße zur Vereinigung mehrerer Chargen von flüssigem Roheisen oder zur Vereinigung mehrerer Chargen von flüssigen Komponenten vorzusehen, in welche Komponenten oder Roheisen zugegeben werden beziehungsweise aus denen Roheisen beziehungsweise Komponenten entnommen werden zur Herstellung von Vorschmelze.

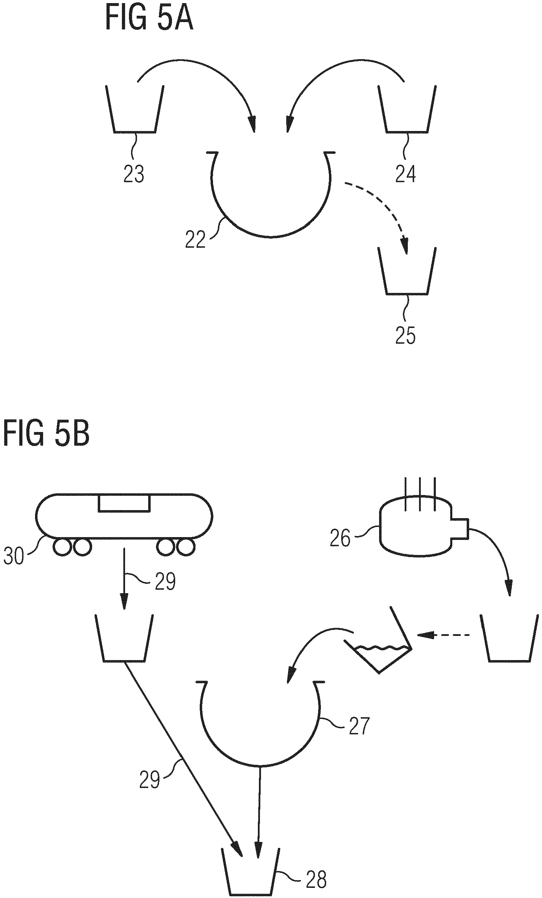

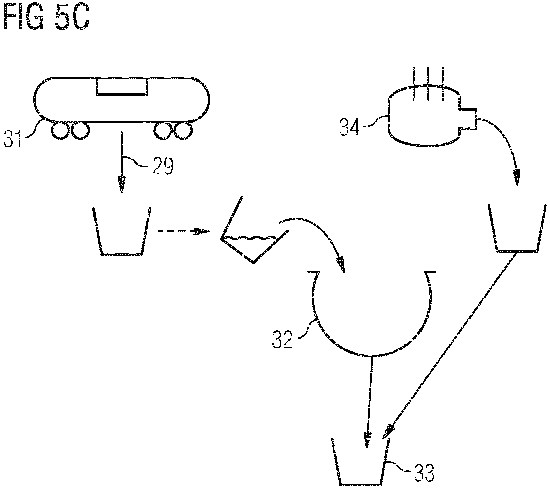

Weitere Beispiele von Optionen zur Herstellung der Vorschmelze sind in den Figuren 5a, 5b, 5c umrissen. Dabei ist die Mischvorrichtung zur Vereinigung von Roheisen und Komponenten als Mischgefäß 22 dargestellt. Als Mischgefäß kann beispielsweise, falls metallurgisch möglich, ein bereits vorhandenes Puffergefäß zur Vereinigung mehrerer Chargen von flüssigem Roheisen oder zur Vereinigung mehrerer Chargen von flüssigem Rohstahl dienen.

Figur 5a zeigt, wie flüssiges Roheisen aus einer Roheisenzufuhr 23 in ein Mischgefäß 22 eingegeben wird - angedeutet mit einem gebogenen Pfeil -, in das auch flüssiger Rohstahl aus einer Komponentenzufuhr 24 eingegeben - angedeutet mit einem gebogenen Pfeil - wird. Aus dem Mischgefäß 22 wird die im Mischgefäß durch Vereinigung von flüssigem Roheisen und flüssigem Rohstahl hergestellte Vorschmelze in ein Transfergefäß 25 zwecks Transfers zum BOF-Meltshop eingegeben - dargestellt durch einen strichlierten Pfeil.

Figur 5b zeigt eine Variante, bei der flüssiger Rohstahl aus dem Elektrolichtbogenofen 26 via ein Zwischengefäß in ein Puffergefäß 27 eingegeben wird. In dem Puffergefäß 27 werden gegebenenfalls mehrere Chargen von flüssigem Rohstahl aus dem Elektrolichtbogenofen 26 vereinigt; das Puffergefäß 27 ist somit ein Rohstahlmischgefäß. Aus dem Puffergefäß 27 wird flüssiger Rohstahl aus dem Elektrolichtbogenofen 26 in ein Mischgefäß 28 eingegeben, in welches auch flüssiges Roheisen 29 aus einem Hochofen - angeliefert durch die Roheisenzufuhr mit Torpedowagen 30 - eingegeben wird. In dem Mischgefäß werden also flüssiges Roheisen 29 und die Komponente flüssiger Rohstahl aus dem Elektrolichtbogenofen 26 vereinigt und dadurch eine Vorschmelze hergestellt.

Figur 5c zeigt eine Variante, bei der flüssiges Roheisen aus einem Hochofen - angeliefert durch die Roheisenzufuhr mit Torpedowagen 31 - via ein Zwischengefäß in ein Puffergefäß 32 eingegeben wird. In dem Puffergefäß 32 werden gegebenenfalls mehrere Chargen von flüssigem Roheisen aus einem Hochofen vereinigt; das Puffergefäß 32 ist somit ein Roheisenmischgefäß. Aus dem Puffergefäß 32 wird flüssiges Roheisen aus einem Hochofen in ein Mischgefäß 33 eingegeben, in welches auch flüssiger Rohstahl aus dem Elektrolichtbogenofen 34 eingegeben wird. In dem Mischgefäß werden also die Komponente flüssiger Rohstahl aus dem Elektrolichtbogenofen 34 und flüssiges Roheisen vereinigt und dadurch eine Vorschmelze hergestellt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination in einem erfindungsgemäßen Verfahren kombinierbar.
Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.
Die beschriebenen Eigenschaften, Merkmale und Vorteile der Erfindung sowie die Art und Weise, wie diese erreicht werden, werden klarer und deutlicher verständlich im Zusammenhang mit der Beschreibung des beziehungsweise der Ausführungsbeispiele der Erfindung, die im Zusammenhang mit den Zeichnungen näher erläutert werden. Das beziehungsweise die Ausführungsbeispiele dient beziehungsweise dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einer beliebigen der Ansprüche kombiniert werden.
Obwohl die Erfindung im Detail durch das beziehungsweise die bevorzugten Ausführungsbeispiele näher illustriert und beschrieben wurde, so ist die Erfindung nicht durch das beziehungsweise die offenbarten Beispiele eingeschränkt und andere Variationen können hieraus abgeleitet werden, ohne den Schutzumfang der Erfindung gemäß den Ansprüchen zu verlassen.

### Liste der Bezugszeichen

- 1: flüssiges Roheisen
- 2a,2b: LD-Konverter
- 3: Torpedowagen
- 4: Entschwefelungsanlage
- 5, 5': flüssiges Roheisen
- 6, 6': Torpedowagen
- 7: flüssiger Rohstahl
- 7': Flüssiges Roheisen
- 8, 8': Elektrolichtbogenofen
- 9, 9': Vorschmelze
- 10: Entschwefelungsanlage
- 11a, 11a', 11b, 11b': LD-Konverter
- 12a, 12a', 12b, 12b': Blaselanze
- 13: Roheisenzufuhr
- 14: Chargierpfanne
- 15: Komponentenzufuhr
- 16: Komponentenzufuhr
- 17: Chargierpfanne
- 18: Roheisenzufuhr
- 19: Komponentenzufuhr
- 20: Roheisenzufuhr
- 21: Transfergefäß
- 22: Mischgefäß
- 23: Roheisenzufuhr
- 24: Komponentenzufuhr
- 25: Transfergefäß
- 26: Elektrolichtbogenofen
- 27: Puffergefäß
- 28: Mischgefäß
- 29: Flüssiges Roheisen
- 30: Torpedowagen
- 31: Torpedowagen
- 32: Puffergefäß
- 33: Mischgefäß
- 34: Elektrolichtbogenofen

## Patentansprüche

1. Verfahren zur Herstellung einer Einsatzschmelze für eine Konverterbehandlung,
**dadurch gekennzeichnet, dass**
dabei durch Vereinigung von flüssigem Roheisen (5,5') aus einem Hochofen und/oder einer Schmelzreduktionsanlage mit zumindest einer der Komponenten
aus der Gruppe bestehend aus
- flüssiger Rohstahl (7) aus einem Elektrolichtbogenofen,
- flüssiger Rohstahl aus einem Induktionsofen,
- flüssiges Roheisen (7') aus einem Elektrolichtbogenofen,
- flüssiges Roheisen aus einem Induktionsofen,
- festes Roheisen aus einem Induktionsofen,
- fester Eisenschwamm aus einem Induktionsofen,
- flüssiges Roheisen aus einem Submerged Arc Furnace (SAF), eine Vorschmelze (9,9') hergestellt wird.

2. Verfahren nach Anspruch 1, **dadurch gekennzeichnet, dass** die Vorschmelze (9,9') bereits die Einsatzschmelze für die Konverterbehandlung ist.

3. Verfahren nach Anspruch 1, **dadurch gekennzeichnet, dass** die Einsatzschmelze für die Konverterbehandlung dadurch gewonnen wird, dass die Vorschmelze (9,9') zumindest einer Behandlungsmaßnahme unterworfen wird

4. Verfahren nach Anspruch 3, **dadurch gekennzeichnet, dass** die Behandlungsmaßnahme eine Entschwefelung umfasst.

5. Verfahren nach einem der Ansprüche 1 bis 4, **dadurch gekennzeichnet, dass**
flüssiger Rohstahl (7) aus einem Elektrolichtbogenofen auf festem Schrott,
oder
auf einer Mischung von festem Schrott mit zumindest einer Komponente aus der Gruppe bestehend aus
- Eisenschwamm,
- Roheisenmasseln,
- Roheisengranulat,
- flüssiges Roheisen aus einem Hochofen und/oder einer Schmelzreduktionsanlage,
- festes Roheisen aus einem Hochofen und/oder einer Schmelzreduktionsanlage,
basiert.

6. Verfahren nach einem der Ansprüche 1 bis 4, **dadurch gekennzeichnet, dass**
flüssiger Rohstahl aus einem Induktionsofen auf festem Schrott
oder
auf einer Mischung von festem Schrott mit zumindest einer Komponente aus der Gruppe bestehend aus
- Eisenschwamm,
- Roheisenmasseln,
- Roheisengranulat,
- flüssiges Roheisen aus einem Hochofen und/oder einer Schmelzreduktionsanlage,
- festes Roheisen aus einem Hochofen und/oder einer Schmelzreduktionsanlage,
basiert.

7. Verfahren nach einem der Ansprüche 1 bis 4, **dadurch gekennzeichnet, dass**
flüssiges Roheisen (7') aus einem Elektrolichtbogenofen auf festem Eisenschwamm
oder
auf einer Mischung von festem Eisenschwamm mit zumindest einer Komponente aus der Gruppe bestehend aus
- flüssiges Roheisen aus einem Hochofen und/oder einer Schmelzreduktionsanlage,
- festes Roheisen aus einem Hochofen und/oder einer Schmelzreduktionsanlage,
- Schrott,
basiert.

8. Verfahren nach einem der Ansprüche 1 bis 4, **dadurch gekennzeichnet, dass**
flüssiges Roheisen aus einem Induktionsofen
auf festem Eisenschwamm
oder
auf einer Mischung von festem Eisenschwamm mit zumindest einer Komponente aus der Gruppe bestehend aus
- flüssiges Roheisen aus einem Hochofen und/oder einer Schmelzreduktionsanlage,
- festes Roheisen aus einem Hochofen und/oder einer Schmelzreduktionsanlage,
- Schrott,
basiert.

9. Verfahren nach einem der Ansprüche 1 bis 4, **dadurch gekennzeichnet, dass**
flüssiges Roheisen aus einem Submerged Arc Furnace (SAF) auf festem Eisenschwamm
oder
auf einer Mischung von festem Eisenschwamm mit zumindest einer Komponente aus der Gruppe bestehend aus
- flüssiges Roheisen aus einem Hochofen und/oder einer Schmelzreduktionsanlage,
- festes Roheisen aus einem Hochofen und/oder einer Schmelzreduktionsanlage,
basiert.

10. Verfahren nach einem der Ansprüche 1 bis 9, **dadurch gekennzeichnet, dass** die Mengenverhältnisse bei der Vereinigung zur Herstellung der Vorschmelze (1) in Abhängigkeit von der Energiebilanz der Konverterbehandlung, der die Einsatzschmelze unterworfen werden soll, gewählt werden.

11. Verfahren zur Herstellung von flüssigem Rohstahl durch Konverterbehandlung, **dadurch gekennzeichnet, dass** eine gemäß einem Verfahren nach einem der Ansprüche 1 bis 10 hergestellte Einsatzschmelze in ein Konvertergefäß eingegeben und dort mit weiteren Komponenten zur Herstellung von flüssigem Rohstahl vereinigt wird.

12. Verfahren nach Anspruch 11, **dadurch gekennzeichnet, dass** eine der weiteren Komponenten ein Heizmittel, bevorzugt Ferrosilizium, ist.

13. Verfahren nach Anspruch 11, **dadurch gekennzeichnet, dass** eine der weiteren Komponenten ein Kühlmittel ist.

14. Rohstahlerzeugungsanlage zur Durchführung eines Verfahrens nach einem der Ansprüche 11 bis 13,
**dadurch gekennzeichnet, dass**
sie
- eine Roheisenzufuhr,
- eine Komponentenzufuhr,
- eine Mischvorrichtung zur Vereinigung von Roheisen und Komponenten,
- ein Konvertergefäß zur Rohstahlherstellung aus der Vorschmelze oder der Einsatzschmelze,
umfasst.

15. Rohstahlerzeugungsanlage nach Anspruch 14, **dadurch gekennzeichnet, dass** sie auch eine Behandlungsvorrichtung, die zur Aufnahme von Vorschmelze und Ausgabe von Einsatzschmelze geeignet ist, umfasst.
